# EUROPEAN PATENT APPLICATION

(11) **EP 3 159 793 A1**
(43) Date of publication of application: **26.04.2017**
(21) Application number: 14897215.1
(22) Date of filing: 11.07.2014
(51) Int. Cl.: G06F 9/48

(54) **METHOD AND TERMINAL FOR EXECUTING HUMAN-COMPUTER INTERACTION FUNCTION**

(71) Applicant: Huawei Technologies Co. Ltd., Shenzhen, Guangdong 518129 (CN)
(72) Inventor: HUANG, Jin, Shenzhen Guangdong 518129 (CN); LI, Zijun, Shenzhen Guangdong 518129 (CN)
(74) Representative: Gill Jennings & Every LLP
(86) International application number: PCT/CN2014/082066
(87) International publication number: WO 2016/004625

(57) **Abstract**

Embodiments of the present invention disclose a human-computer interaction function execution method and a terminal, to avoid an existing case in which desktop programs are closed to each other and cannot be combined together, so that a user can simultaneously use human-computer interaction functions in multiple desktop programs. The method of the embodiments of the present invention includes: invoking, when a first human-computer interaction function is executed, a first application program corresponding to the first human-computer interaction function in a first desktop program, and executing the first application program, to provide the first human-computer interaction function; and invoking, when a second human-computer interaction function is executed, a second application program corresponding to the second human-computer interaction function in a second desktop program, and executing the second application program, to provide the second human-computer interaction function.

## Description

### TECHNICAL FIELD

The present invention relates to the communications field, and in particular, to a human-computer interaction function execution method and a terminal.

### BACKGROUND

An operating system of a terminal includes a kernel and a human-computer interaction module. Based on the kernel, operating systems providing different experience are formed by customizing different human-computer interaction modules. For example, operating systems of mobile phone manufacturers are formed by using an Android system as the kernel and customizing different human-computer interaction modules. The human-computer interaction module provided by the operating system by default generally provides a large quantity of human-computer interaction functions. In addition, other human-computer interaction modules installed on the operating system can provide some human-computer interaction functions, and these human-computer interaction modules are referred to as desktop programs, such as Mihome, Go Launcher, and the Facebook Home program. These desktop programs are application programs, and can be installed and run on the operating system to replace some functions of the human-computer interaction module provided by the operating system by default. Because the human-computer interaction module provided by the operating system by default provides human-computer interaction functions as the desktop programs do, the human-computer interaction module may also be understood as a default desktop program of the terminal. The human-computer interaction functions refer to some function modules that are provided by the terminal and that enable a user to perform human-computer communication or operations, such as a theme function, screen unlocking, and an application store.

Currently, after a desktop program is executed, a desktop program currently running on a terminal is replaced by the newly executed desktop program, a human-computer interaction function of the terminal is handed over to the newly executed desktop program, and a human-computer interaction subfunction provided by another desktop program cannot be used.

During actual use, when multiple desktop programs are installed on an operating system, if a user wants to execute a human-computer interaction function provided by one of the desktop programs, the user needs to exit the other desktop programs. When the user likes some functions (for example, a theme function) presented in one desktop program, and also likes another function (for example, screen unlocking) of another desktop program, because each desktop program is closed, when one desktop program is started, another desktop program cannot be used simultaneously.

### SUMMARY

Embodiments of the present invention provide a human-computer interaction function execution method and a terminal, to avoid an existing case in which desktop programs are closed to each other and cannot be combined together, so that a user can simultaneously use human-computer interaction functions in multiple desktop programs.

A first aspect of the embodiments of the present invention provides a human-computer interaction function execution method, including:
invoking, when a first human-computer interaction function is executed, a first application program corresponding to the first human-computer interaction function in a first desktop program, and executing the first application program, to provide the first human-computer interaction function; and
invoking, when a second human-computer interaction function is executed, a second application program corresponding to the second human-computer interaction function in a second desktop program, and executing the second application program, to provide the second human-computer interaction function.

With reference to the first aspect of the embodiments of the present invention, in a first implementation manner of the first aspect of the embodiments of the present invention, before the step of invoking, when a first human-computer interaction function is executed, a first application program corresponding to the first human-computer interaction function in a first desktop program, the method further includes:
reading a correspondence between a human-computer interaction function and an application program in a desktop program, where the correspondence includes a correspondence between at least two human-computer interaction functions and application programs of at least two desktop programs.

With reference to the first implementation manner of the first aspect of the embodiments of the present invention, in a second implementation manner of the first aspect of the embodiments of the present invention, before the step of reading a correspondence, the method further includes:
configuring the correspondence between the at least two human-computer interaction functions and the application programs of the at least two desktop programs.

With reference to any implementation manner of the first aspect of the embodiments of the present invention to the second implementation manner of the first aspect, in a third implementation manner of the first aspect of the embodiments of the present invention, the method further includes:
invoking, when a third human-computer interaction function is executed, a third application program corresponding to the third human-computer interaction function in the first desktop program, and executing the third application program, to provide the third human-computer interaction function; or
invoking, when a third human-computer interaction function is executed, a fourth application program corresponding to the third human-computer interaction function in a third desktop program, and executing the fourth application program, to provide the third human-computer interaction function.

With reference to any implementation manner of the first implementation manner of the first aspect of the embodiments of the present invention to the third implementation manner of the first aspect, in a fourth implementation manner of the first aspect of the embodiments of the present invention, the human-computer interaction function in the correspondence is represented by using a function identifier, and the application program is represented by using an entrypoint function name.

A second aspect of the embodiments of the present invention provides a terminal, including:
an invoking module, configured to invoke, when a first human-computer interaction function is executed, a first application program corresponding to the first human-computer interaction function in a first desktop program; and
a processing module, configured to execute the first application program, to provide the first human-computer interaction function, where
the invoking module is further configured to invoke, when a second human-computer interaction function is executed, a second application program corresponding to the second human-computer interaction function in a second desktop program; and
the processing module is further configured to execute the second application program, to provide the second human-computer interaction function.

With reference to the second aspect of the embodiments of the present invention, in a first implementation manner of the second aspect of the embodiments of the present invention, the invoking module is further configured to read a correspondence between a human-computer interaction function and an application program in a desktop program, where the correspondence includes a correspondence between at least two human-computer interaction functions and application programs of at least two desktop programs.

With reference to the first implementation manner of the second aspect of the embodiments of the present invention, in a second implementation manner of the second aspect of the embodiments of the present invention, the terminal further includes:
a configuration module, configured to configure the correspondence between the at least two human-computer interaction functions and the application programs of at least two desktop programs.

With reference to the second aspect of the embodiments of the present invention to the second implementation manner of the second aspect, in a third implementation manner of the second aspect of the embodiments of the present invention,
the invoking module is further configured to invoke, when a third human-computer interaction function is executed, a third application program corresponding to the third human-computer interaction function in the first desktop program; and
the processing module is further configured to execute the third application program, to provide the third human-computer interaction function;
or
the invoking module is further configured to invoke, when a third human-computer interaction function is executed, a fourth application program corresponding to the third human-computer interaction function in a third desktop program; and
the processing module is further configured to execute the fourth application program, to provide the third human-computer interaction function.

A third aspect of the embodiments of the present invention provides a terminal, including:
an input apparatus, an output apparatus, and a processor, where
the input apparatus is configured to receive an operation for requesting a human-computer interaction function;
the output apparatus is configured to display the human-computer interaction function; and
the processor is configured to:
   invoke, when a first human-computer interaction function is executed, a first application program corresponding to the first human-computer interaction function in a first desktop program, and execute the first application program, to provide the first human-computer interaction function; and
   invoke, when a second human-computer interaction function is executed, a second application program corresponding to the second human-computer interaction function in a second desktop program, and execute the second application program, to provide the second human-computer interaction function.

With reference to the third aspect of the embodiments of the present invention, in a first implementation manner of the third aspect of the embodiments of the present invention, the processor is further configured to read a correspondence between a human-computer interaction function and an application program in a desktop program, where the correspondence includes a correspondence between at least two human-computer interaction functions and application programs of at least two desktop programs.

With reference to the first implementation manner of the third aspect of the embodiments of the present invention, in a second implementation manner of the third aspect of the embodiments of the present invention, the processor is further configured to configure the correspondence between the at least two human-computer interaction functions and the application programs of at least two desktop programs.

With reference to the third aspect of the embodiments of the present invention to the second implementation manner of the third aspect, in a third implementation manner of the third aspect of the embodiments of the present invention,
the processor is further configured to invoke, when a third human-computer interaction function is executed, a third application program corresponding to the third human-computer interaction function in the first desktop program, and execute the third application program, to provide the third human-computer interaction function;
or
the processor is further configured to invoke, when a third human-computer interaction function is executed, a fourth application program corresponding to the third human-computer interaction function in a third desktop program, and execute the fourth application program, to provide the third human-computer interaction function.

As can be seen from the foregoing technical solutions, the embodiments of the present invention have the following advantages: when a first human-computer interaction function is executed, a first application program corresponding to the first human-computer interaction function in a first desktop program is invoked, and the first application program is executed, to provide the first human-computer interaction function; and when a second human-computer interaction function is executed, a second application program corresponding to the second human-computer interaction function in a second desktop program is invoked, and the second application program is executed, to provide the second human-computer interaction function. In this manner, an existing case in which desktop programs are closed to each other and cannot be combined together is avoided, so that a user can simultaneously use human-computer interaction functions provided by different desktop programs.

### BRIEF DESCRIPTION OF DRAWINGS

FIG. 1 is a schematic flowchart of a human-computer interaction function execution method according to an embodiment of the present invention;
FIG. 2 is another schematic flowchart of a human-computer interaction function execution method according to an embodiment of the present invention;
FIG. 3 is another schematic flowchart of a human-computer interaction function execution method according to an embodiment of the present invention;
FIG. 4 is a schematic relationship diagram of desktop programs according to an embodiment of the present invention;
FIG. 5 is a schematic diagram of a manner for classifying a human-computer interaction function according to an embodiment of the present invention;
FIG. 6 is a schematic structural diagram of a terminal according to an embodiment of the present invention;
FIG. 7 is another schematic structural diagram of a terminal according to an embodiment of the present invention; and
FIG. 8 is another schematic structural diagram of a terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention.

It should be understood that although terms such as first and second may be used to describe desktop programs or application programs in the embodiments of the present invention, the desktop programs or the application programs should not be limited to these terms. These terms are merely used to distinguish the desktop programs or the application programs. For example, a first desktop program may also be referred to as a second desktop program without departing from the scope of the embodiments of the present invention. Similarly, the second desktop program may also be referred to as the first desktop program. Likewise, a second application program may also be referred to as a third application program or the like, which is not limited in the embodiments of the present invention herein.

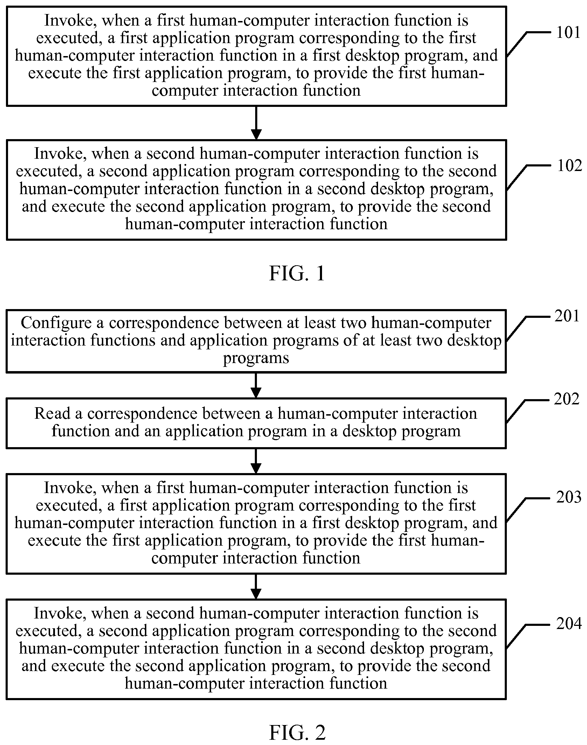

Referring to FIG. 1, an embodiment of a human-computer interaction function execution method among the embodiments of the present invention includes:

101: Invoke, when a first human-computer interaction function is executed, a first application program corresponding to the first human-computer interaction function in a first desktop program, and execute the first application program, to provide the first human-computer interaction function.

When a user needs to execute a first human-computer interaction function, the user operates a terminal to execute the first human-computer interaction function, and the terminal invokes a first application program corresponding to the first human-computer interaction function in a first desktop program, and executes the first application program, to provide the first human-computer interaction function.

102: Invoke, when a second human-computer interaction function is executed, a second application program corresponding to the second human-computer interaction function in a second desktop program, and execute the second application program, to provide the second human-computer interaction function.

When the user needs to execute a second human-computer interaction function, the user operates the terminal to execute the second human-computer interaction function. In this case, the terminal invokes a second application program corresponding to the second human-computer interaction function in a second desktop program, and executes the second application program, to provide the second human-computer interaction function.

It can be understood that there is no limitation on a sequence of executing the first human-computer interaction function and the second human-computer interaction function. In addition to the foregoing case in which the terminal first executes the first human-computer interaction function and then executes the second human-computer interaction function, the terminal may first execute the second human-computer interaction function and then execute the first human-computer interaction function. For some human-computer interaction functions that do not conflict with each other, even two functions may be executed at one time, which is not limited herein.

It should be noted that step 101 and step 102 may be performed in an environment in which a same desktop program runs, for example, may be performed in an environment in which a default desktop program runs. In this case, only the default desktop program is running. The terminal invokes, in the default desktop program, the application programs in the first desktop program and the second desktop program, to provide the first human-computer interaction function and the second human-computer interaction function. Alternatively, step 101 and step 102 may be performed in an environment in which any other desktop program runs, for example, both are performed in the first desktop program. When the first desktop program is running, the terminal executes the first application program in the first desktop program, to provide the first human-computer interaction function, and executes, at the same time in the first desktop program, the second application program in the second desktop program, to provide the second human-computer interaction function. The "at the same time" herein does not mean a limitation that two human-computer interaction functions are executed at the same moment, but means that human-computer interaction functions provided by different desktop programs may be executed in an environment in which a same desktop program runs, which is not limited herein.

In this embodiment of the present invention, when a first human-computer interaction function is executed, a first application program corresponding to the first human-computer interaction function in a first desktop program is invoked, and the first application program is executed, to provide the first human-computer interaction function; and when a second human-computer interaction function is executed, a second application program corresponding to the second human-computer interaction function in a second desktop program is invoked, and the second application program is executed, to provide the second human-computer interaction function. In this manner, an existing case in which desktop programs are closed to each other and cannot be combined together is avoided, so that a user can simultaneously use human-computer interaction functions provided by different desktop programs.

In the foregoing embodiment, the first application program is invoked when the first human-computer interaction function is executed, and the second application program is invoked when the second human-computer interaction function is executed. During actual use, before performing corresponding invoking, the terminal may first read a correspondence between a human-computer interaction function and an application program of a desktop program, and may further configure the correspondence before reading the correspondence. Referring to FIG. 2, another embodiment of a human-computer interaction function execution method among the embodiments of the present invention includes:

201: Configure a correspondence between at least two human-computer interaction functions and application programs of at least two desktop programs.

There are many types of human-computer interaction functions, and each type of human-computer interaction function may be executed by at least one application program. A terminal configures a correspondence between at least two human-computer interaction functions and application programs of at least two desktop programs.

There are many manners for configuring the correspondence. For example, the correspondence may be represented by using a mapping table, or the correspondence may be represented by using an array, a matrix, or a high-dimensional parameter space, which is not limited herein.

Optionally, the configuration may be performed manually. For example, a user performs configuration according to a choice of the user, or the terminal may perform configuration according to a rule. For example, for a human-computer interaction function, a corresponding application program in a desktop program that is installed latest and that can provide the human-computer interaction function is selected as an application program corresponding to the human-computer interaction function.

Optionally, during a configuration process, all human-computer interaction functions, that is, all human-computer interaction functions that can be provided by a default desktop program and other desktop programs installed on an operating system, may be configured. Each human-computer interaction function may be configured, and an application program corresponding to each human-computer interaction function is determined.

Optionally, during the configuration process, only some human-computer interaction functions separately corresponding to multiple application programs may be configured, while a human-computer interaction function corresponding to only one application program may not be configured. During execution, the terminal may search for the only corresponding application program executing the human-computer interaction function, to provide the human-computer interaction function.

Optionally, in the correspondence, the human-computer interaction function is represented by using a function identifier, and the application program is represented by using an entrypoint function name.

It can be understood that in step 201, the correspondence is configured only after a new desktop program is installed or when the correspondence needs to be changed, and the step does not need to be performed each time a human-computer interaction function is executed.

202: Read a correspondence between a human-computer interaction function and an application program in a desktop program.

On the basis of the configured correspondence, the terminal may read a configured correspondence between a human-computer interaction function and an application program in a desktop program, where the correspondence includes the correspondence between the at least two human-computer interaction functions and the application programs of the at least two desktop programs.

The correspondence may be read when the terminal is started and powered on, or may be read when the terminal executes the human-computer interaction function, which is not limited herein.

The reading a correspondence may be specifically establishing a connection between human-computer interaction functions on the terminal and corresponding application programs, so that when a human-computer interaction function is subsequently executed, a corresponding application program can be quickly invoked and executed.

Optionally, if some of the human-computer interaction functions are configured when the correspondence is configured, when reading a human-computer interaction function, the terminal may search for an application program uniquely corresponding to the human-computer interaction function that is not configured, to establish a correspondence. For a human-computer interaction function that is not configured and that corresponds to more than one application program, in this case, a configuration window may pop up on the terminal for a user to perform configuration, or a latest installed application program among application programs corresponding to the human-computer interaction function may be selected by default as an application program corresponding to the human-computer interaction function, or another default selection manner may be used, for example, a corresponding application program in a default desktop program may be selected, or a corresponding application program in a desktop program that runs most frequently may be selected, which is not limited herein.

203: Invoke, when a first human-computer interaction function is executed, a first application program corresponding to the first human-computer interaction function in a first desktop program, and execute the first application program, to provide the first human-computer interaction function.

When a user needs to execute a first human-computer interaction function, the user operates the terminal to execute the first human-computer interaction function; the terminal searches the correspondence, and obtains that an application program corresponding to the first human-computer interaction function is a first application program in a first desktop program; the terminal invokes the first application program, and executes the first application program, to provide the first human-computer interaction function.

204: Invoke, when a second human-computer interaction function is executed, a second application program corresponding to the second human-computer interaction function in a second desktop program, and execute the second application program, to provide the second human-computer interaction function.

When a user needs to execute a second human-computer interaction function, the user operates the terminal to execute the second human-computer interaction function; the terminal searches the correspondence, and obtains that an application program corresponding to the second human-computer interaction function is a second application program in a second desktop program; in this case, the terminal invokes the second application program corresponding to the second human-computer interaction function in the second desktop program, and executes the second application program, to provide the second human-computer interaction function.

It can be understood that there is no limitation on a sequence of executing the first human-computer interaction function and the second human-computer interaction function.

It can be understood that both step 203 and step 204 may be performed in an environment in which a same desktop program runs.

In this embodiment of the present invention, before a human-computer interaction function is executed, a correspondence between the human-computer interaction function and an application program in a desktop program is configured first, so that a user can choose to use an application program in a desktop program that the user likes to execute a human-computer interaction function, and the correspondence is read before the human-computer interaction function is executed, so that the corresponding application program can be found more accurately and quickly when the human-computer interaction function is executed, thereby improving accuracy and stability in a running process.

When the correspondence between the human-computer interaction function and the application program in the desktop program is configured, multiple manners may be used to represent the correspondence. A mapping table is used as an example below:

As shown in Table 1, which is an example of the mapping table, different human-computer interaction functions are represented by using different function identifiers, and an application program corresponding to the human-computer interaction function in the desktop program is represented by using "desktop program name: name of an entrypoint function of an application program implementing the human-computer interaction function in the desktop program":

**Table 1**

| Function identifier | Human-computer interaction function | Application program |
|---|---|---|
| F1 | Screen locking | UI2:sub_func1 |
| F2 | Network configuration | UI1:sub_func2 |
| F3 | Online theme | UI4:sub_func3 |
| F4 | Offline theme | UI1:sub_func4 |
| F5 | Application store | UI4:sub_func5 |
| F6 | Cloud storage | UI4:sub_func6 |

It can be understood that when the correspondence is configured, information about human-computer interaction functions that can be implemented in the desktop programs, information about entrypoint functions of application programs that can implement the human-computer interaction functions, and information about the correspondence between the human-computer interaction functions that can be implemented in the desktop programs and the entrypoint functions of the application programs are required. All the information is located in description files of the desktop programs. When the correspondence is configured, the terminal may read the information from the description files of the desktop programs.

When the correspondence is configured, different human-computer interaction functions may be implemented by invoking corresponding application programs in different desktop programs. For example, F1 in Table 1 is implemented by a corresponding application program in a desktop program UI2, F2 and F4 are implemented by corresponding application programs in a desktop program UI1, and F3, F5 and F6 are implemented by corresponding application programs in a desktop program UI4. In addition, it may be further configured that both F1 and F2 are implemented by corresponding application programs in the desktop program UI1, while F3, F4, F5, and F6 are all implemented by corresponding application programs in the desktop program UI2. Certainly, it may be further configured that F1, F2, F3, F4, and F5 are all implemented by corresponding application programs in the desktop program UI4, while F6 is implemented by a corresponding application program in UI1. Even, every different human-computer interaction function may be implemented by a corresponding application program in a different desktop program, or there may be other various different manners for configuring the correspondence according to preference of a user or a preset rule, which is not limited herein.

In addition, there may be other different human-computer interaction functions, for example, there may be a traffic monitoring function represented by F7, and there may be other different desktop programs, such as a desktop program UI5 and a desktop program UI6, which may be determined according to an actual situation and is not limited herein.

Optionally, when each desktop program is installed on an operating system, each desktop program may further write each description file into a default desktop program of the terminal. In this manner, when the correspondence is configured, the terminal may read the information from the default desktop program.

As shown in the following Table 2, Table 2 is an example of a description file of a desktop program UI1:

**Table 2**

| Function identifier | Human-computer interaction function | Entrypoint function | Parameter |
|---|---|---|---|
| F2 | Network configuration | sub_func2() | ... |
| F1 | Screen locking | sub_func1() | ... |
| F4 | Offline theme | sub_func4() | ... |
| F5 | Application store | sub_func5() | ... |

As can be obtained from the description file of the desktop program UI1 shown in Table 2, human-computer interaction functions that can be implemented by the desktop program UI1 are network configuration, screen locking, offline theme, and application store, which are respectively represented by function identifiers F2, F1, F4, and F5, and entrypoint function names of application programs corresponding to the four human-computer interaction functions in the desktop program UI1 may be further obtained. Some other parameters may be further obtained if necessary.

As can be seen by comparing the exemplary Table 1 of the mapping table with the exemplary Table 2 of the description file, two human-computer interaction functions provided by the desktop program UI1, that is, the network configuration and the offline theme, are used in the configured mapping table; the human-computer interaction function of screen locking that UI1 can also implement is provided by an application program represented by an entrypoint function name sub_func1 in the used desktop program UI2; the human-computer interaction function of application store that UI1 can also implement is provided by an application program represented by an entrypoint function name sub_func5 in the used desktop program UI4.

When the correspondence is configured, if the user also hopes to implement the two human-computer interaction functions of screen locking and application store by using application programs provided in the desktop program UI1, the user may modify the correspondence. Modification on the mapping table 1 representing the correspondence is used as an example herein:

When the user selects the human-computer interaction function of screen locking that the user hopes to modify in the mapping table, the terminal may search the description files of the desktop programs, and display a desktop program that can implement the human-computer interaction function of screen locking. For example, two desktop programs UI1 and UI2 that can implement the human-computer interaction function may be displayed herein. Certainly, there may be other more desktop programs.

When the user selects UI1, the terminal finds, through searching, that a name of an entrypoint function implementing the human-computer interaction function of screen locking in the description file of UI1 is sub_func1, and the terminal may perform modification so that an application program corresponding to the human-computer interaction function of screen locking in the mapping table is represented by UI1: sub_func1; likewise, the terminal may perform corresponding modification on the human-computer interaction function of application store. If another human-computer interaction function needs to be modified, a similar operation may be performed.

It should be understood that the user may further delete a correspondence in the mapping table. In this case, the terminal may directly delete a corresponding entry in the mapping table, for example, may delete an entry in which the desktop program UI4 is used to provide the online theme in the mapping table shown in Table 1.

The terminal may further add a correspondence to the mapping table. A human-computer interaction function, such as the online theme, is selected, and then a displayed desktop program, such as UI4 or UI2, that can provide the human-computer interaction function is selected. For example, if the user selects UI4, the terminal finds an entrypoint function name sub_func3 of a corresponding application program from a description file of the desktop program UI4, and uses the entrypoint function name sub_func3 to represent the application program corresponding to the human-computer interaction function of online theme. After modification, deletion, and addition are performed on the exemplary mapping table 1, the mapping table may be shown as the following Table 3:

**Table 3**

| Function identifier | Human-computer interaction function | Application program |
|---|---|---|
| F1 | Screen locking | UI1:sub_func1 |
| F2 | Network configuration | UI1:sub_func2 |
| F3 | Online theme | UI4:sub_func3 |
| F4 | Offline theme | UI1:sub_func4 |
| F5 | Application store | UI1:sub_func5 |
| F6 | Cloud storage | UI4:sub_func6 |

As shown in Table 3, after the modification, that is, four human-computer interaction functions that can be implemented by the desktop program UI1 are provided by using the application programs of the desktop program UI1, other two human-computer interaction functions are provided by using the application programs in the desktop program UI4.

In the foregoing embodiment, when application programs in multiple desktop programs in the terminal can all provide a same human-computer interaction function, only a correspondence between the human-computer interaction function and an application program selected for use may exist in the mapping table, the rest application programs that can implement the human-computer interaction function are not displayed in the mapping table. Optionally, during actual use, a correspondence between a human-computer interaction function and all application programs that can implement the human-computer interaction function may be recorded in the mapping table, but only one correspondence selected for use is in an enabled state, and the rest correspondences of the human-computer interaction function are in a disabled state, and when the correspondence is read, the correspondences in the disabled state may be ignored.

As can be seen from the example of the configuration of the correspondence, a quantity of executed human-computer interaction functions is not limited to two, and there may be more human-computer interaction functions. In the correspondence, a quantity of desktop programs providing application programs is not limited to two either. For example, there are three desktop programs in the exemplary Table 1, and there may be more desktop programs. Likewise, further, one human-computer interaction function may be implemented by application programs in multiple desktop programs, and the terminal may execute one of the application programs to provide the human-computer interaction function.

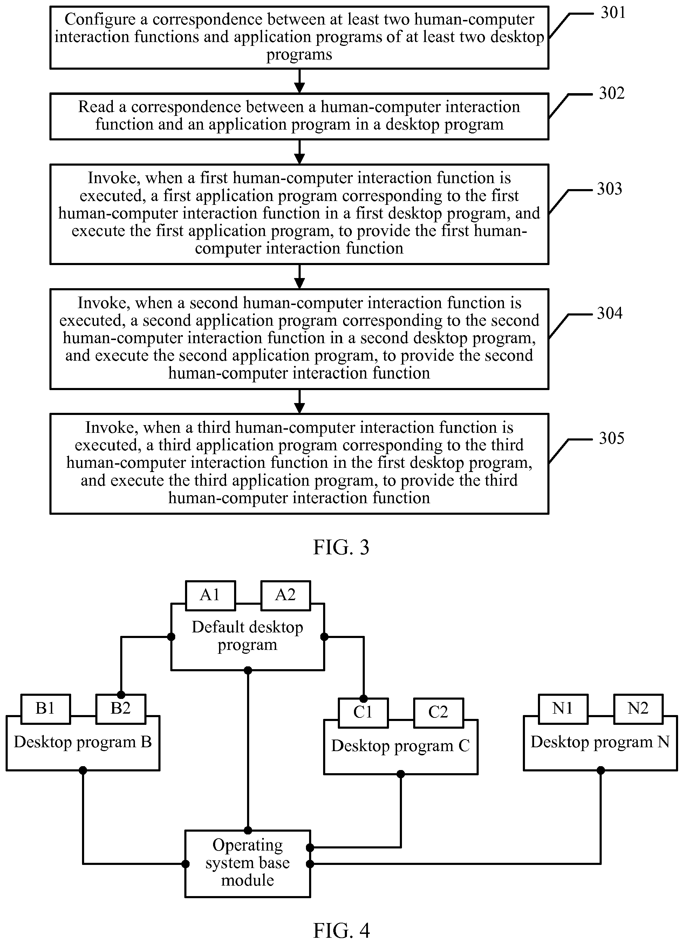

A case in which there are more than two human-computer interaction functions that are executed in an embodiment is used below as an example for description. Referring to FIG. 3, another embodiment of a human-computer interaction function execution method among the embodiments of the present invention includes:

Step 301 to step 304 are similar to step 201 to step 204, and are not described herein again.

305: Invoke, when a third human-computer interaction function is executed, a third application program corresponding to the third human-computer interaction function in the first desktop program, and execute the third application program, to provide the third human-computer interaction function.

When a user needs to execute a third human-computer interaction function, the user operates a terminal to execute the third human-computer interaction function; the terminal searches a correspondence, and obtains that an application program corresponding to the third human-computer interaction function is a third application program in a first desktop program; and the terminal invokes the third application program, and executes the third application program, to provide the first the third human-computer interaction function.

Optionally, if the third human-computer interaction function corresponds to a fourth application program in a third desktop program in the correspondence, the terminal may invoke the fourth application program, and execute the fourth application program, to provide the third human-computer interaction function.

It can be understood that steps 303, 304, and 305 may all be performed in a same desktop program environment.

In this embodiment of the present invention, the terminal may simultaneously invoke application programs in more than two different desktop programs, to provide more than two human-computer interaction functions. In addition, when application programs in multiple desktop programs can all provide a human-computer interaction function, the terminal may execute, according to the correspondence, one of the application programs, to provide the human-computer interaction function.

For the convenience of understanding, the human-computer interaction function execution method in this embodiment of the present invention is specifically described below by using a specific application scenario.

A terminal configures a correspondence between a human-computer interaction function and an application program in a desktop program, and the correspondence is represented by using a mapping table. The configured mapping table is shown in Table 1.

When the terminal is powered on and started, the terminal reads the correspondence in the mapping table shown in Table 1, and establishes a connection between each human-computer interaction function and a desktop program. When reading the correspondence shown in Table 1, the terminal may further provide a human-computer interaction function of traffic monitoring in addition to the human-computer interaction functions shown in Table 1, but the human-computer interaction function has no correspondence in the mapping table shown in Table 1. The terminal reads description files of the desktop programs, and obtains that the human-computer interaction function of traffic monitoring is provided only by an application program that is represented by an entrypoint function name sub_func7 in an desktop program UI5, and the terminal automatically adds a correspondence between the human-computer interaction function of traffic monitoring and the application program to the correspondence. The mapping table after addition is shown in Table 4:

**Table 4**

| Function identifier | Human-computer interaction function | Application program |
|---|---|---|
| F1 | Screen locking | UI2:sub_func1 |
| F2 | Network configuration | UI1:sub_func2 |
| F3 | Online theme | UI4:sub_func3 |
| F4 | Offline theme | UI1:sub_func4 |
| F5 | Application store | UI4:sub_func5 |
| F6 | Cloud storage | UI4:sub_func6 |
| F7 | Traffic monitoring | UI5:sub_func7 |

When a user executes an F1 screen locking function by using the terminal, the terminal invokes an application program that is represented by an entrypoint function name sub_func1 in the desktop program UI2, and executes the application program, to provide the screen locking function.

When a user executes an F2 network configuration function by using the terminal, the terminal invokes an application program that is represented by an entrypoint function name sub_func2 in the desktop program UI1, and executes the application program, to provide the network configuration function.

When a user executes an F3 online theme function by using the terminal, the terminal invokes an application program that is represented by an entrypoint function name sub_func3 in the desktop program UI4, and executes the application program, to provide the online theme function.

The terminal may provide another human-computer interaction function by using a process similar to the foregoing process.

When executing the human-computer interaction functions provided by different desktop programs, the terminal may be in a same desktop program environment, for example, in an environment in which a default desktop program runs, or may be in environments in which different desktop programs run, which is not limited herein.

The terminal in this embodiment of the present invention is described below. Using FIG. 4 as an example, an operating system of the terminal includes an operating system base module, configured to provide basic services of the operating system except human-computer interaction functions, for example, capabilities such as a file system, input and output, communication, and application program management. These base services support running of a default desktop program (a default human-computer interaction module) and desktop programs installed on the operating system. The default desktop program includes two default human-computer interaction functions A1 and A2 of the operating system. A desktop program B that can provide human-computer interaction functions B1 and B2 and a desktop program C that can provide human-computer interaction functions C1 and C2 are further installed on the operating system, the rest can be deduced by analogy, and a desktop program N that can provide human-computer interaction functions N1 and N2 may be further installed.

Each human-computer interaction function has a corresponding application program. It can be understood that during actual use, the application program may be a piece of executable code, or may be an entrypoint that can invoke another function, or may be a combination of a piece of executable code and an entrypoint, which is not limited herein.

An example in which a default desktop program and installed desktop programs each provide two human-computer interaction functions is used in FIG. 4. During actual use, a quantity of human-computer interaction functions is not limited, and is determined according to each operating system and each desktop program.

Human-computer interaction functions provided by the terminal are a set of all human-computer interaction functions that are provided by the desktop programs installed on the operating system and the default desktop program, for example, A1, A2, B1, B2, C1, C2, N1, and N2 in FIG. 4.

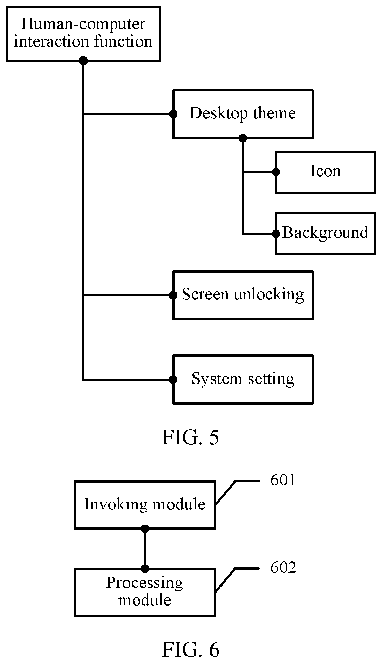

A human-computer interaction function is a function that is provided by a desktop program and that has an independent operation entrypoint, for example, a desktop theme, screen unlocking, traffic monitoring, an application store, or application program management. A1, A2, B1, B2, and the like in FIG. 4 represent different human-computer interaction functions. A preferred manner for describing the human-computer interaction function is a layered and hierarchical tree structure. Each node of the tree is a human-computer interaction function. As shown in FIG. 5, FIG. 5 is manner for classifying a human-computer interaction function, where total nodes include three human-computer interaction functions: desktop theme, screen unlocking, and system setting, and the desktop theme includes two human-computer interaction functions: icon and background.

It can be understood that desktop programs have a same human-computer interaction function, but because the human-computer interaction function corresponds to different application programs in different desktop programs, implementation effects of the human-computer interaction function may be different. For example, a default desktop program can provide a desktop theme function, and another desktop program installed on the operating system may provide the desktop theme function. The two functions are a same human-computer interaction function, but the implementation effects of the two functions are different. Configuration and reading of the correspondence are specifying a determined application program to execute each human-computer interaction function.

The terminal in this embodiment of the present invention is specifically described below. Referring to FIG. 6, an embodiment of a terminal among the embodiments of the present invention includes:
an invoking module 601, configured to invoke, when a first human-computer interaction function is executed, a first application program corresponding to the first human-computer interaction function in a first desktop program; and
a processing module 602, configured to execute the first application program invoked by the invoking module 601, to provide the first human-computer interaction function, where
the invoking module 601 is further configured to invoke, when a second human-computer interaction function is executed, a second application program corresponding to the second human-computer interaction function in a second desktop program; and
the processing module 602 is further configured to execute the second application program invoked by the invoking module 601, to provide the second human-computer interaction function.

In this embodiment of the present invention, when a first human-computer interaction function is executed, an invoking module 601 invokes a first application program corresponding to the first human-computer interaction function in a first desktop program, and a processing module 602 executes the first application program, to provide the first human-computer interaction function; when a second human-computer interaction function is executed, the invoking module 601 invokes a second application program corresponding to the second human-computer interaction function in a second desktop program, and the processing module 602 executes the second application program, to provide the second human-computer interaction function. In this manner, an existing case in which desktop programs are closed to each other and cannot be combined together is avoided, so that a user can simultaneously use human-computer interaction functions provided by different desktop programs.

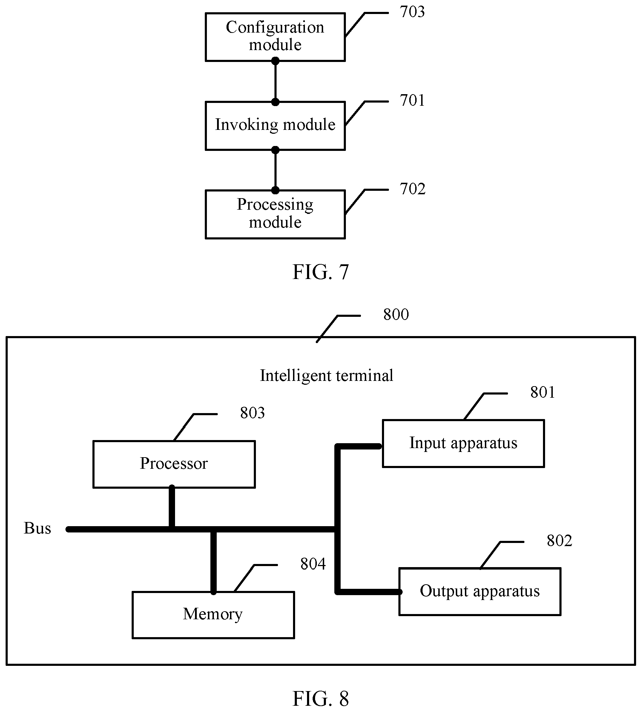

In the foregoing embodiment, when the processing module 602 executes the first human-computer interaction function, the invoking module 601 invokes the first application program, and when the processing module 602 executes the second human-computer interaction function, the invoking module 601 invokes the second application program. During actual use, before performing corresponding invoking, the invoking module 601 may first read a correspondence between a human-computer interaction function and an application program of a desktop program. Further, before reading the correspondence, the terminal may further configure the correspondence. Referring to FIG. 7, another embodiment of a terminal among the embodiments of the present invention includes:
an invoking module 701, configured to invoke, when a first human-computer interaction function is executed, a first application program corresponding to the first human-computer interaction function in a first desktop program; and
a processing module 702, configured to execute the first application program invoked by the invoking module 701, to provide the first human-computer interaction function, where
the invoking module 701 is further configured to invoke, when a second human-computer interaction function is executed, a second application program corresponding to the second human-computer interaction function in a second desktop program; and
the processing module 702 is further configured to execute the second application program invoked by the invoking module 701, to provide the second human-computer interaction function.

In this embodiment, the invoking module 701 is further configured to read a correspondence between a human-computer interaction function and an application program in a desktop program, where the correspondence includes a correspondence between at least two human-computer interaction functions and application programs of at least two desktop programs.

The terminal may further include:
a configuration module 703, configured to configure the correspondence between the at least two human-computer interaction functions and the application programs of at least two desktop programs that is invoked by the invoking module 701.

Optionally, the invoking module 701 is further configured to invoke, when a third human-computer interaction function is executed, a third application program corresponding to the third human-computer interaction function in the first desktop program. In this case, the processing module 702 is further configured to execute the third application program invoked by the invoking module 701, to provide the third human-computer interaction function.

Optionally, the invoking module 701 is further configured to invoke, when a third human-computer interaction function is executed, a fourth application program corresponding to the third human-computer interaction function in a third desktop program. In this case, the processing module 702 is further configured to execute the fourth application program invoked by the invoking module 701, to provide the third human-computer interaction function.

In this embodiment of the present invention, before a human-computer interaction function is executed, the configuration module 703 first configures a correspondence between the human-computer interaction function and an application program in a desktop program, so that a user can choose to use an application program in a desktop program that the user likes to execute a human-computer interaction function, and the invoking module 701 first reads the correspondence before the human-computer interaction function is executed, so that the corresponding application program can be found more accurately and quickly when the human-computer interaction function is executed, thereby improving accuracy and stability in a running process.

For the convenience of understanding the foregoing embodiment, a process of interaction between modules of the foregoing terminal in a specific application scenario is described below:

The configuration module 703 configures a correspondence between a human-computer interaction function and an application program in a desktop program, and the correspondence is represented by using a mapping table. The configured mapping table is shown in Table 1.

When the terminal is powered on and started, the invoking module 701 reads the correspondence in the mapping table shown in Table 1, and establishes a connection between each human-computer interaction function and a desktop program. When reading the correspondence shown in Table 1, the invoking module 701 detects that the terminal may further provide a human-computer interaction function of traffic monitoring in addition to the human-computer interaction functions shown in Table 1, but the human-computer interaction function has no correspondence in the mapping table shown in Table 1. The invoking module 701 reads description files of the desktop programs, and obtains that the human-computer interaction function of traffic monitoring is provided only by an application program that is represented by an entrypoint function name sub_func7 in a desktop program UI5, and the invoking module 701 automatically adds a correspondence between the human-computer interaction function of traffic monitoring and the application program to the correspondence. The mapping table after addition is shown in Table 4.

When a user executes an F1 screen locking function by using the terminal, the invoking module 701 invokes an application program that is represented by an entrypoint function name sub_func1 in the desktop program UI2, and the processing module 702 executes the application program, to provide the screen locking function.

When a user executes an F2 network configuration function by using the terminal, the invoking module 701 invokes an application program that is represented by an entrypoint function name sub_func2 in the desktop program UI1, and the processing module 702 executes the application program, to provide the network configuration function.

When a user executes an F3 online theme function by using the terminal, the invoking module 701 invokes an application program that is represented by an entrypoint function name sub_func3 in the desktop program UI4, and the processing module 702 executes the application program, to provide the online theme function.

The invoking module 701 and the processing module 702 may provide another human-computer interaction function by using an operation process similar to the foregoing operation process.

The terminal in this embodiment of the present invention is described above from a perspective of a unitized functional entity. The terminal in this embodiment of the present invention is described below from a perspective of hardware processing. Referring to FIG. 8, another embodiment of a terminal 800 among the embodiments of the present invention includes:
an input apparatus 801, an output apparatus 802, and a processor 803. The terminal may further include a memory 804 (where there may be one or more processors 803 in the terminal 800, and an example in which there is one processor 803 is used in FIG. 8). In some embodiments of the present invention, the input apparatus 801, the output apparatus 802, the processor 803, and the memory 804 may be connected to each other by using a bus or in another manner. An example in which the connection is implemented by using the bus is used in FIG. 8.

The processor 803 is configured to execute an instruction and complete an operation related to an intelligent terminal system (for example, by using an instruction acquired from the memory). The processor 803 may control receiving and manipulation of input and output data between components of the terminal system. The processor may be implemented on a single chip or multiple chips or multiple electronic elements, and may use multiple architectures, including a dedicated or an embedded processor, a dedicated processor, a controller, an ASIC, and the like.

The memory 804 includes a persistent memory and a non-persistent memory. The former may be a hard disk, an SD card (secure digital memory card), or the like, used to store an operating system base module, a default human-computer interaction module, a desktop program, and another application program; and the latter is main memory. When a program is run, the program needs to be loaded from the persistent storage to the main memory, and temporary data that is generated during a running process of the program is also saved in the main memory.

The input apparatus 801 and the output apparatus 802 are configured for human-computer interaction. A user may send a control instruction to the terminal by using the input apparatus 801, which may be specifically that the input apparatus 801 receives an operation for requesting a human-computer interaction function, for example, may receive an operation for requesting a user to execute a human-computer interaction function. The user may receive a processing result and feedback information of the terminal by using the output apparatus 802, which may be specifically that the input apparatus 802 displays the human-computer interaction function, for example, displays an execution result of the human-computer interaction function to the user. For example, the input apparatus 801 may be a keyboard, a touchscreen, a microphone, and the like, and the output apparatus 802 may be a display, a speaker, and the like.

By invoking an operation instruction stored in the memory 804, the processor 803 is configured to:
invoke, when a first human-computer interaction function is executed, a first application program corresponding to the first human-computer interaction function in a first desktop program, and execute the first application program, to provide the first human-computer interaction function; and
invoke, when a second human-computer interaction function is executed, a second application program corresponding to the second human-computer interaction function in a second desktop program, and execute the second application program, to provide the second human-computer interaction function.

In some embodiments of the present invention, the processor 803 is further configured to:
read a correspondence between a human-computer interaction function and an application program in a desktop program, where the correspondence includes a correspondence between at least two human-computer interaction functions and application programs of at least two desktop programs.

In some embodiments of the present invention, the processor 803 is further configured to configure the correspondence between the at least two human-computer interaction functions and the application programs of the at least two desktop programs.

In some embodiments of the present invention, the processor 803 is further configured to:
invoke, when a third human-computer interaction function is executed, a third application program corresponding to the third human-computer interaction function in the first desktop program, and execute the third application program, to provide the third human-computer interaction function;
or
invoke, when a third human-computer interaction function is executed, a fourth application program corresponding to the third human-computer interaction function in a third desktop program, and execute the fourth application program, to provide the third human-computer interaction function.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A human-computer interaction function execution method, comprising:
invoking, when a first human-computer interaction function is executed, a first application program corresponding to the first human-computer interaction function in a first desktop program, and executing the first application program, to provide the first human-computer interaction function; and
invoking, when a second human-computer interaction function is executed, a second application program corresponding to the second human-computer interaction function in a second desktop program, and executing the second application program, to provide the second human-computer interaction function.

2. The method according to claim 1, wherein before the step of invoking, when a first human-computer interaction function is executed, a first application program corresponding to the first human-computer interaction function in a first desktop program, the method further comprises:
reading a correspondence between a human-computer interaction function and an application program in a desktop program, wherein the correspondence comprises a correspondence between at least two human-computer interaction functions and application programs of at least two desktop programs.

3. The method according to claim 2, wherein before the step of reading a correspondence, the method further comprises:
configuring the correspondence between the at least two human-computer interaction functions and the application programs of the at least two desktop programs.

4. The method according to any one of claims 1 to 3, wherein the method further comprises:
invoking, when a third human-computer interaction function is executed, a third application program corresponding to the third human-computer interaction function in the first desktop program, and executing the third application program, to provide the third human-computer interaction function; or
invoking, when a third human-computer interaction function is executed, a fourth application program corresponding to the third human-computer interaction function in a third desktop program, and executing the fourth application program, to provide the third human-computer interaction function.

5. The method according to any one of claims 2 to 4, wherein the human-computer interaction function in the correspondence is represented by using a function identifier, and the application program is represented by using an entrypoint function name.

6. A terminal, comprising:
an invoking module, configured to invoke, when a first human-computer interaction function is executed, a first application program corresponding to the first human-computer interaction function in a first desktop program; and
a processing module, configured to execute the first application program, to provide the first human-computer interaction function, wherein
the invoking module is further configured to invoke, when a second human-computer interaction function is executed, a second application program corresponding to the second human-computer interaction function in a second desktop program; and
the processing module is further configured to execute the second application program, to provide the second human-computer interaction function.

7. The terminal according to claim 6, wherein the invoking module is further configured to read a correspondence between a human-computer interaction function and an application program in a desktop program, wherein the correspondence comprises a correspondence between at least two human-computer interaction functions and application programs of at least two desktop programs.

8. The terminal according to claim 7, wherein the terminal further comprises:
a configuration module, configured to configure the correspondence between the at least two human-computer interaction functions and the application programs of at least two desktop programs.

9. The terminal according to any one of claims 6 to 8, wherein
the invoking module is further configured to invoke, when a third human-computer interaction function is executed, a third application program corresponding to the third human-computer interaction function in the first desktop program; and
the processing module is further configured to execute the third application program, to provide the third human-computer interaction function;
or
the invoking module is further configured to invoke, when a third human-computer interaction function is executed, a fourth application program corresponding to the third human-computer interaction function in a third desktop program; and
the processing module is further configured to execute the fourth application program, to provide the third human-computer interaction function.

10. A terminal, comprising:
an input apparatus, an output apparatus, and a processor, wherein
the input apparatus is configured to receive an operation for requesting a human-computer interaction function;
the output apparatus is configured to display the human-computer interaction function; and
the processor is configured to:
invoke, when a first human-computer interaction function is executed, a first application program corresponding to the first human-computer interaction function in a first desktop program, and execute the first application program, to provide the first human-computer interaction function; and
invoke, when a second human-computer interaction function is executed, a second application program corresponding to the second human-computer interaction function in a second desktop program, and execute the second application program, to provide the second human-computer interaction function.

11. The terminal according to claim 10, wherein the processor is further configured to read a correspondence between a human-computer interaction function and an application program in a desktop program, wherein the correspondence comprises a correspondence between at least two human-computer interaction functions and application programs of at least two desktop programs.

12. The terminal according to claim 11, wherein the processor is further configured to configure the correspondence between the at least two human-computer interaction functions and the application programs of the at least two desktop programs.

13. The terminal according to any one of claims 10 to 12, wherein
the processor is further configured to invoke, when a third human-computer interaction function is executed, a third application program corresponding to the third human-computer interaction function in the first desktop program, and execute the third application program, to provide the third human-computer interaction function;
or
the processor is further configured to invoke, when a third human-computer interaction function is executed, a fourth application program corresponding to the third human-computer interaction function in a third desktop program, and execute the fourth application program, to provide the third human-computer interaction function.
